# EUROPEAN PATENT APPLICATION

(11) **EP 3 989 080 A1**
(43) Date of publication of application: **27.04.2022**
(21) Application number: 20382914.8
(22) Date of filing: 20.10.2020
(51) Int. Cl.: G06F 16/25, G06F 11/36

(54) **DATA TRANSFORMATION AND VERIFICATION METHOD**

(71) Applicant: ING Bank N.V. Sucursal en España, Madrid (ES)
(72) Inventor: QUEIRÓS MARTINS, Luis Manuel, 28028 Madrid (ES)
(74) Representative: Elzaburu S.L.P.

(57) **Abstract**

A transformation method for data delivered from at least one data source to a source table of a source system, which are transformed into information data loaded in a destination table of a destination system, comprising the steps of deleting previous information data in the destination table, transforming the data of the source table and the data of at least one reference table when executing an extraction, transformation and loading (ETL) process to supply information data that are loaded in the destination table of the destination system, determining at least one key column in the destination table, randomly selecting at least one value of the key column, where one random value is selected from each non-key column of the source table, to be tested, loading a table of the testing tool with the established relationships between the random value selected with the non-key column of the source table, and emptying the destination table. Similarly, the source table is prepared according to at least one testing or user verification scenario desired to perform a comparison step of the modified source table and the modified destination table; if the result of the comparison is as desired the extraction, transformation and loading (ETL) process is correct.

## Description

### Object

The present invention relates to a method for transforming and verifying data that monitors and manages execution tasks of transformation rules for transforming data into information and information into knowledge, and the information data are entered in a database.

### State of the art

Numerous applications required daily loading of data to function. The use of data for analysis has become a necessary requirement. The data received for analysis can be supplied in a wide range of formats or in different file types.

The variety of manners in which these data can be received can make a meaningful analysis of the data to be too complex and costly.

Current solutions present difficulties in monitoring and maintenance, as the data can originate in multiple systems with dissimilar origins, and also require the execution of a large number of processing steps and therefore a high number of verification steps. If a fault occurs, current solutions do not provide a mechanism for dealing with and correctly identifying the fault.

It is therefore necessary to develop a methodology to verify and report with sufficient quality in order to increase the correctness and accuracy of the analysis of these data.

### Summary

The present invention seeks to solve one or more of the aforementioned drawbacks set forth above by means of a data transformation and verification method as defined in the claims.

The method intends to improve the capacity to maintain and simplify the monitoring of a data system.

The data transformation method is implemented by a transformation application server that executes a transformation rule on data of a source table, stored in a source repository, to load a destination table that is in turn stored in a destination repository.

In the transformation method, the data delivered from a data source to a source table of a source system are transformed into information data loaded in a destination table of a destination system, such that the method involves the steps of deleting previous information data in the destination table, transforming the data of the source table and the data of a reference table when executing an extraction, transformation and loading (ETL) process to load the information data in the destination table, determining at least one key column in the destination table to select randomly at least one value of the key column, selecting one random value from each non-key column of the source table, to be verified, loading a table of the testing tool with the established relationships between the random value selected with the non-key column of the source table, and emptying the destination table.

To carry out the verification of the ETL process, the source table is prepared according to at least one testing or verification scenario selected by the user.

The method involves modifying the non-key columns of the source table by applying a predetermined pattern of commands loaded in a patterns table, depending on the random value corresponding to the non-key column to be modified in the source table. The same extraction, transformation, and loading (ETL) process applied to the destination table is applied to the modified source table.

At the end of the ETL process, a comparison step is performed of the testing tool table and the modified destination table. If the result of this comparison is as expected from the transformation rule, which comprise a predetermined ETL process, it is correct.

A transformation application server executes the data transformation rule, and comprises a memory component, an interactive user interface that receives at least one input from the user, a computer server that comprises at least one processor, coupled to the memory component and to the interactive user interface.

The data transformation system and method provides advantages related to the administration and management of data amounts from several sources of different types, such as structured data sources or non-structure data sources.

Other advantages include improved efficiency, speed, and user experience.

In fact, the data transformation method is independent of the source data and destination data, thereby providing flexibility and scalability. In addition, the system does not require storing large amounts of data to perform the comparison step, improving efficiency and saving system resources.

The system increases the capacity to transform and/or modify data for performing analyses and/or can improve the precision of the prediction and/or allow the use of more robust data analysis techniques.

The data transformation method comprising a testing and administration tool meant for monitoring and management functions allows users to monitor and administer several processes and view the status of the work for many different sources.

The testing tool is intended for a data comparison tool that also allow comparing volumes of data between source and destination tables.

### Brief description of the figures

A more detailed explanation of the device according to the embodiments of the invention is given in the description below , based on the attached figures in which:
Figure 1 shows a flow chart with the steps for preparing a destination table;
Figure 2 shows a flow chart with the steps for a source table; and
Figure 3 shows a flow chart with the steps for creating a verification report.

### Detailed description

A method for transforming and segmenting or grouping data from at least one data source of a source system, which are transformed into information data that are loaded in a destination system.

The source system and destination system comprise a data service with access to one or more databases that store data.

The source system includes at least one data source comprising at least one application server at least having a shared folder, a file exchange tool, a file directory and extraction, transformation and loading functions (ETL processes).

Each data source can provide its related incoming data in a different format, including information related to at least one target service, and can also include other types of information in which the data service may not be interested.

The transformation method executes a testing and administration tool that can be integrated with other service administration tools.

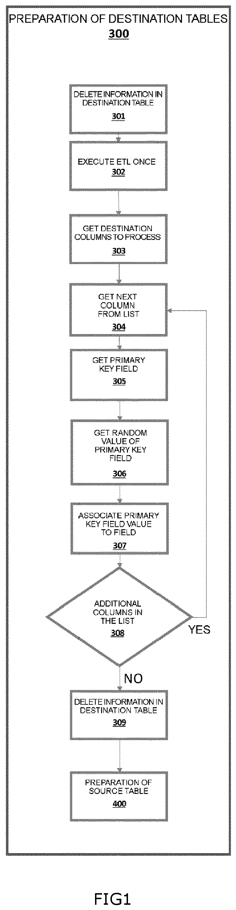

Figure 1 shows a flow chart for the implementation of the incoming data transformation method executed by the testing and administration tool. Figure 1 illustrates certain steps performed in a specific order, which may be altered.

In an initial phase a destination table, comprised in the destination system, is adapted before being loaded with transformed data from a source table of the source system. The destination system is adapted by a step 301 of emptying or deleting.

The source table retrieves data from several sources and the loaded data are transformed by executing an ETL process in step 302.

The ETL process extracts the usable data from each column and combines them with the usable data of at least one reference table associated with the source table. The ETL process comprises instructions for transforming different columns of the source table, thereby transforming the data to create an output associated with the desired analysis. The destination table is loaded with the output of the ETL process. Each output can be used as input for a subsequent analysis, thereby generating a transformation pipeline.

The inputted data analysis information can include the identification of usable data in the source table.

By identifying the usable data in the source table and transforming the usable data, the system provides functionality for allowing users to modify different data types from different source data origins and creating an accessible grouping or segmentation that allows users to track the transformed data.

When the destination table has been completed, the testing and administration tool identifies the non-key columns of the destination table, step 303, and then each one is read, step 304, to identify and retrieve at least one random value from each key column identified, step 306. The number of transformed data retrieved must be equal to the number of non-key columns to be verified, in step 307. Each random value is associated with one non-key column identified. Therefore, each random value retrieved from a key column is unique and is used only once by the testing tool.

The above steps are repeated until each non-key column is associated with a random value, in step 308. A table stores information associated with a random value and with the corresponding non-key column.

After obtaining the correlation table between the random values and the non-key columns, the transformed data of the destination table are deleted in step 309.

The source table is then adapted in step 400 to classify the input data, identify relevant information data, and allow a user to modify the relevant information to perform the desired verifications.

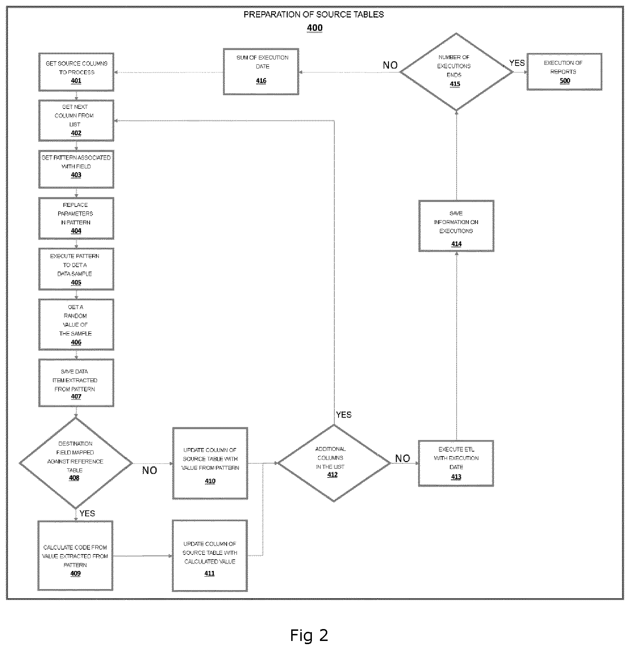

With regard to figure 2, the user identifies the number of columns in the source table to check or monitor in step 401. When the columns have been identified they are individually processed in step 402.

The testing tool comprises a plurality of patterns, where each pattern is associated with each column that has to be processed. Therefore, a patter is extracted in step 403 from a table of patterns. The testing tool enters the variables associated with each non-key column in the pattern extracted in step 404, to update the non-key columns in the source table, executing the pattern extracted in step 405. The information that will be entered in the source table to update it is generated from the extracted pattern. Each pattern is associated with certain commands that generate information.

The values obtained from executing the extracted pattern are used to select a random value in step 406. The random values selected are stored in a table of the test tool in step 407.

The test tool comprises a mapping/correlation table that includes the configurations that indicate the relationships between the columns of the source table, the columns of the reference tables, and the columns of the destination table. In step 409 a field of the source table column is updated using a reference table included in the mapping table, where the reference table is associated with the field to be modified, and with the random value of step 406.

The value obtained in step 409 will be used in step 411 to update the source table field to process in the entry containing the random value of the key column of the destination table obtained in step 306. If the value to be processed does not use reference tables, the value obtained in step 407 will be used in step 410 to update the source table field to process in the entry containing the random value of the key column of the destination table obtained in step 306. If there are more columns to process, the process returns to step 402. When the columns of the source table have been updated the ETL process is executed, step 413, for the current execution date. The ETL process executed is the same as the ETL process executed to load the destination table.

All the information on the execution of the ETL process is stored in step 414. The number of times that the ETL process was executed is verified in step 415. If the number of executions is less than that indicated by the user, the execution date is incremented and the process returns immediately to step 401. If the number of executions is the same as those indicated by the user, the process continues in step 500.

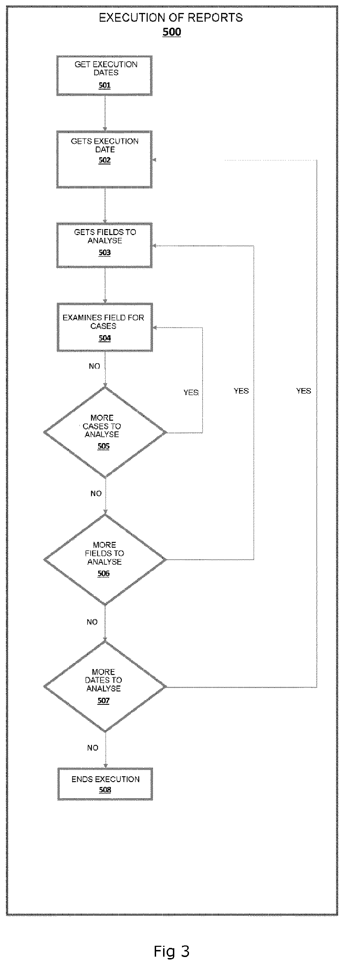

Figure 3 shows a report execution stage. Once the execution dates have been obtained in step 501, which are used each time step 413 is executed, the first date obtained in step 501 is retrieved by increasing order in step 502. With the execution dates all the fields to be analysed are obtained in step 503, such that each field is processed individually.

Then the field obtained in 503 for the date obtained in 502 is processed in step 504, considering the scenario provided by the user, which can be applied in steps 503 and 502.

If there are no more scenarios to examine, the process proceeds to step 505. If there are more scenarios to examine for steps 503 and 502 the process returns to step 504. If there are more fields to analyse, the process returns to step 503, and when all the fields to analyse have finished the process continues to the status of step 507, where it is verified if there are additional execution dates to examine. If so it returns to step 502; otherwise, the process ends in step 508.

Figures 2 and 3 show a number of steps performed in a specific order.

The user can provide a comparison scenario, which can include the identification of a source of origin and a target. The comparison scenario can also include comparison details, such as comparison of a subset, two fields, with another subset.

The data testing tool can extract data from the source and destination servers and then apply the transformation rules to format, truncate, concatenate, or perform other functions for the optimum comparison of potentially dissimilar data.

The data testing tool can be configured with a transformation rule that identifies the corresponding fields in dissimilar formats and applies the transformation to allow an optimum comparison.

The transformation rule can recognise that a value X for an attribute in a first table can have a corresponding value Y of a corresponding attribute in a second table.

The data testing tool can perform an execution for test cases. The test cases can represent multiple scenarios to be executed. The test cases can include comparison details. The test cases can specify a comparison of a first set of fields in the source table with a second set of fields in the destination table.

## Claims

1. A method for transforming data delivered from at least one data source to a source table of a source system, which are transformed into information data that are loaded in a destination system, where the method comprises the steps of:
a. deleting previous information steps from a destination table of the destination system,
b. transforming the data of the source table and the data of at least one reference table when executing a process of extraction, transformation and loading (ETL) for providing information data to load the destination table of the destination system,
c. determining at least one key column of the destination table,
d. randomly selecting at least one value of the key, selecting one random value for each non-key column of the source table to be tested,
e. loading a table of the testing tool with the relationships established between the random value selected with the non-key column of the source table,
f. emptying the destination table.

2. Method according to claim 1, wherein the source table is prepared according to at least one desired testing or user verification scenario.

3. Method according to claim 2, wherein the method comprises modifying the non-key columns of the source table by applying a predetermined command pattern loaded in a pattern table according to the random value corresponding to the non-key column to be modified in the source table.

4. Method according to claim 3, wherein the method comprises executing the extraction, transformation and loading (ETL) process on the modified source table.

5. Method according to claim 4, wherein the method comprises comparing the modified source table and the modified destination table, if the result of the comparison is as desired the extraction, transformation and loading (ETL) process is correct.

6. A computer program comprising instructions which, when executed by a processor, makes the processor perform actions according to any of claims 1 to 5.
